# EUROPEAN PATENT APPLICATION

(11) **EP 3 912 696 A1**
(43) Date of publication of application: **24.11.2021**
(21) Application number: 20187065.6
(22) Date of filing: 21.07.2020
(51) Int. Cl.: A63F 13/21, A63F 13/42, G06F 3/01

(54) **METHOD OF INTERACTING WITH VIRTUAL CREATURE IN VIRTUAL REALITY ENVIRONMENT AND VIRTUAL OBJECT OPERATING SYSTEM**

(30) Priority: 22.05.2020 US 202016880999
(71) Applicant: XRSpace CO., LTD., Taoyuan City 330 (TW)
(72) Inventor: KE, Shih-Hao, 251 New Taipei City (TW); YEN, Wei-Chi, 104 Taipei City (TW); CHOU, Ming-Ta, 105 Taipei City (TW)
(74) Representative: Wimmer, Hubert

(57) **Abstract**

A method of interacting with virtual creature (303, 402, 501, 604) and a virtual object operating system (100) are provided. In the method, a manipulating portion (502, 503) on a virtual object pointed by a user and an object type of the virtual object are identified, and the object type includes a virtual creature (303, 402, 501, 604) created in a virtual reality environment. A manipulating action performed by the user is identified, and the manipulating action is corresponding to the virtual object. An interacting behavior of an avatar (605) of the user with the virtual object is determined according to the manipulating portion (502, 503), the object type, and the manipulating action. Accordingly, a variety of interacting behaviors is provided.

## Description

### TECHNICAL FIELD

The present disclosure generally relates to a simulation in the virtual world, in particular, to a virtual object operating system and a method of interacting with virtual creature.

### BACKGROUND

Technologies for simulating senses, perception, and/or environment, such as virtual reality (VR), augmented reality (AR), mixed reality (MR), and extended reality (XR), are popular nowadays. The aforementioned technologies can be applied in multiple fields, such as gaming, military training, healthcare, remote working, etc.

In a virtual world, a user may interact with one or more virtual persons. In general, these virtual persons are configured with predefined actions, such as specific dialogues, deals, fights, services, etc. However, merely one type of predefined action would be configured for one virtual person. For example, a virtual soldier merely fights with the avatar of the user, even the avatar performs a handshaking gesture. In actual, there are lots of interacting behaviors for a person in the real world. Therefore, the interacting behaviors in the virtual world should be improved.

### SUMMARY OF THE DISCLOSURE

Accordingly, the present disclosure is directed to a virtual object operating system and a method of interacting with virtual creature, to simulate the behavior of a virtual object and/or an avatar of the user in a virtual reality environment.

In one of the exemplary embodiments, a method of interacting with virtual creature includes the following steps. A manipulating portion on a virtual creature pointed by a user and an object type of the virtual creature are identified. The object type includes a virtual animal in a virtual environment. A manipulating action performed by the user is identified. The manipulating action is corresponding to the virtual creature. An interacting behavior of an avatar of the user with the virtual creature is determined according to the manipulating portion, the object type, and the manipulating action.

In one of the exemplary embodiments, a virtual object operating system includes, but not limited to, a motion sensor and a processor. The motion sensor is used for detecting a motion of a human body portion of a user. The processor is coupled to the motion sensor. The processor identifies a manipulating portion on the virtual creature pointed by the user and an object type if the virtual creature, identifies a manipulating action based on a sensing result of the motion of the human body portion detected by the motion sensor, and determines an interacting behavior of an avatar of the user with the virtual creature according to the manipulating portion, the object type, and the manipulating action. The object type includes a virtual animal in a virtual environment. The manipulating action is corresponding to the virtual creature.

In light of the foregoing, according to the virtual object operating system and the method of interacting with virtual creature, all of the manipulating portion, the manipulating action, and the object type of the virtual creature (including a virtual animal) would be configured to determine a proper interacting behavior with the virtual object. Accordingly, a variety of interacting behaviors can be provided.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a virtual object operating system according to one of the exemplary embodiments of the disclosure.
FIG. 2 is a flowchart illustrating a method of interacting with virtual creature according to one of the exemplary embodiments of the disclosure.
FIG. 3A and 3B are schematic diagrams illustrating an object selection method with a raycast according to one of the exemplary embodiments of the disclosure.
FIG. 4 is a schematic diagram illustrating an object selection method with interacting regions according to one of the exemplary embodiments of the disclosure.
FIG. 5 is a schematic diagram illustrating multiple manipulating portions according to one of the exemplary embodiments of the disclosure.
FIG. 6A and 6B are schematic diagrams illustrating a teleport action according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

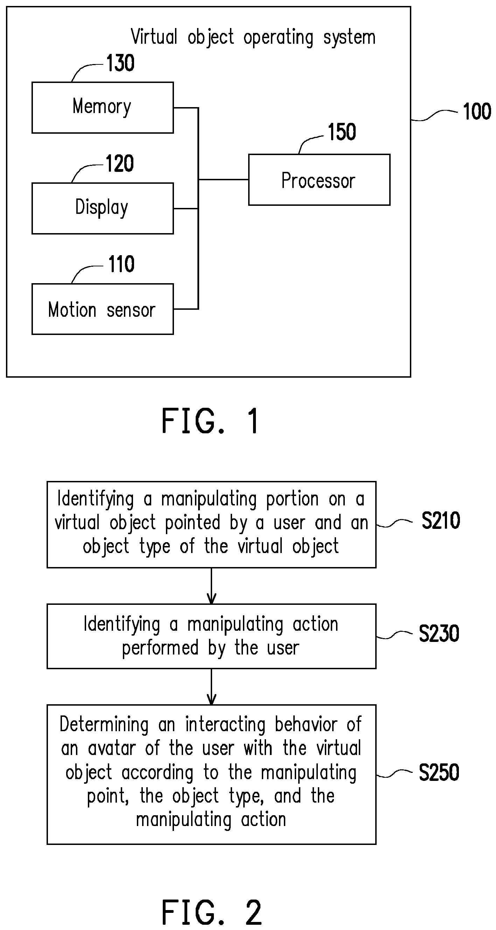

FIG. 1 is a block diagram illustrating a virtual object operating system 100 according to one of the exemplary embodiments of the disclosure. Referring to FIG. 1, the virtual object operating system 100 includes, but not limited to, one or more motion sensors 110, a display 120, a memory 130, and a processor 150. The virtual object operating system 100 can be adapted for VR, AR, MR, XR, or other reality related technology. In some embodiments, the virtual object operating system 100 could be a head-mounted display (HMD) system, a reality related system, or the like.

The motion sensor 110 may be an accelerometer, a gyroscope, a magnetometer, a laser sensor, an inertial measurement unit (IMU), an infrared ray (IR) sensor, an image sensor, a depth camera, or any combination of aforementioned sensors. In the embodiment of the disclosure, the motion sensor 110 is used for sensing the motion of one or more human body portions of a user for a time period. The human body portion may be a hand, a head, an ankle, a leg, a waist, or other portions. The motion sensor 110 may sense the motion of the corresponding human body portion, to generate motion-sensing data from the sensing result of the motion sensor 110 (e.g. camera images, sensed strength values, etc.) at multiple time points within the time period. For one example, the motion-sensing data comprises a 3-degree of freedom (3-DoF) data, and the 3-DoF data is related to the rotation data of the human body portion in three-dimensional (3D) space, such as accelerations in yaw, roll, and pitch. For another example, the motion-sensing data comprises a relative position and/or displacement of a human body portion in the 2D/3D space. In some embodiments, the motion sensor 110 could be embedded in a handheld controller or a wearable apparatus, such as a wearable controller, a smartwatch, an ankle sensor, an HMD, or the likes.

The display 120 may be a liquid-crystal display (LCD), a light-emitting diode (LED) display, an organic light-emitting diode (OLED) display, or other displays. In the embodiment of the disclosure, the display 120 is used for displaying images, for example, the virtual reality environment. It should be noted that, in some embodiments, the display 120 may be a display of an external apparatus (such as a smartphone, a tablet, or the likes), and the external apparatus can be placed on the main body of an HMD.

The memory 130 may be any type of a fixed or movable Random-Access Memory (RAM), a Read-Only Memory (ROM), a flash memory, or a similar device or a combination of the above devices. The memory 130 can be used to store program codes, device configurations, buffer data, or permanent data (such as motion sensing data, sensing result, predetermined interactive characteristics, etc.), and these data would be introduced later.

The processor 150 is coupled to the motion sensor 110, the display 120, and/or the memory 130, and the processor 150 is configured to load the program codes stored in the memory 130, to perform a procedure of the exemplary embodiment of the disclosure.

In some embodiments, the processor 150 may be a central processing unit (CPU), a microprocessor, a microcontroller, a digital signal processing (DSP) chip, a field programmable gate array (FPGA), etc. The functions of the processor 150 may also be implemented by an independent electronic device or an integrated circuit (IC), and operations of the processor 150 may also be implemented by software.

It should be noticed that the processor 150 may not be disposed at the same apparatus with the motion sensor 110 or the display 120. However, the apparatuses respectively equipped with the motion sensor 110 and the processor 150 or the display 120 and the processor 150 may further include communication transceivers with compatible communication technology, such as Bluetooth, Wi-Fi, and IR wireless communications, or physical transmission line, to transmit or receive data with each other. For example, the display 120 and the processor 150 may be disposed in an HMD while the motion sensor 110 is disposed outside the HMD. For another example, the processor 150 may be disposed in a computing device while the motion sensor 110 and the display 120 is disposed outside the computing device.

To better understand the operating process provided in one or more embodiments of the disclosure, several embodiments will be exemplified below to elaborate the operating process of the virtual object operating system 100. The devices and modules in the virtual object operating system 100 are applied in the following embodiments to explain the virtual object operating method provided herein. Each step of the virtual object operating method can be adjusted according to actual implementation situations and should not be limited to what is described herein.

FIG. 2 is a flowchart illustrating a method of interacting with virtual creature according to one of the exemplary embodiments of the disclosure. Referring to FIG. 2, the processor 150 may identify a manipulating portion on a virtual creature pointed by a user and an object type of the virtual creature (step S210). Specifically, the processor 150 may track the motion of one or more human body portions of the user through the motion sensor 110, to obtain the sensing result of the human body portions. The processor 150 may further determine the position of the human body portion based on the sensing result. For example, the position of the hand of the user or the position of a handheld controller held by the user's hand. In one embodiment, the determined position related to the tracked human body portion can be used to form a raycast, which is visible in the display 120 and could be a straight line or a curve, with a reference point (such as the user's eyes, an end of the handheld controller, the motion sensor 110 in the HMD, etc.) in the virtual reality environment. In another embodiment, the determined position related to the tracked human body portion can be used to form a teleport location, which may be presented by a reticle in the display 120, without a visible raycast in the virtual reality environment. The raycast and the teleport location may be moved with the motion of the human body portion, and an end of the raycast or the teleport location could be represented as an aiming target of the user. If the end of the raycast or the teleport location is located at a virtual object, a manipulating portion on the virtual object would be determined. The manipulating portion is related to the end of the raycast or the teleport location and could be considered as where the user points at.

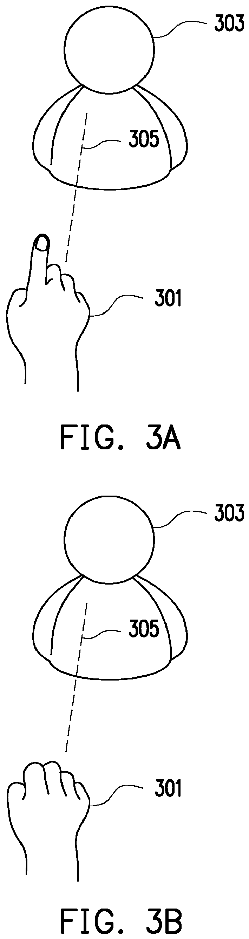

FIG. 3A and 3B are schematic diagrams illustrating an object selection method with a raycast 305 according to one of the exemplary embodiments of the disclosure. Referring to FIG. 3A, in this embodiment, the motion sensor 110 is an image sensor. The processor 150 may analyze images captured by the motion sensor 110 and identify the gesture of the user's hand 301. If the gesture of the user's hand 301 is one index finger up gesture, the raycast 305, which emits from the user's hand 301, may be formed. The user can use the raycast 305 to aim a virtual person 303 in the virtual reality environment.

Referring to FIG. 3B, if the gesture of the user's hand 301 becomes the fist gesture from one index finger up gesture, the processor 150 determines the manipulating portion is located at the virtual person 303.

In another embodiment, the manipulating portion of the virtual object is related to a collision event with an avatar of the user. The processor 150 may form a first interacting region acted with a body portion of the avatar of the user and form a second interacting region acted with the virtual object. The first and second interacting regions are used to define the positions of the human body portion and the virtual object, respectively. The shape of the first or the second interacting region may be a cube, a plate, a dot, or other shapes. The first interacting region may surround or just be located at the human body portion, and the second interacting region may surround or just be located at the virtual object. The processor 150 may determine whether the first interacting region collides with the second interacting region to determining the manipulating portion, and the manipulating portion is related to a contact portion between the first interacting region and the second interacting region. The collision event may happen when two interacting regions are overlapped or contacted with each other.

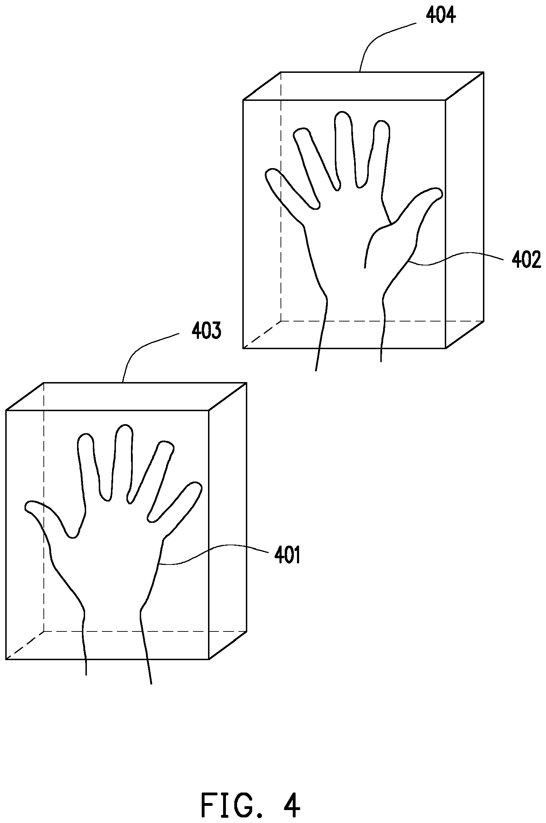

For example, FIG. 4 is a schematic diagram illustrating an object selection method with interacting regions 403 and 404 according to one of the exemplary embodiments of the disclosure. Referring to FIG. 4, the interacting region 403 is formed and surrounds the user's hand 401. The interacting region 404 is formed and surrounds the virtual person's hand 402. If the interacting region 403 collides with the interacting region 404, a manipulating portion is formed at the virtual person's hand 402.

In one embodiment, the object type of the virtual object could be a virtual creature (such as virtual human, dog, cat, etc.), an abiotic object, a floor, a seat, etc. created in the virtual reality environment, and the processor 150 may identify the object type of the virtual object pointed by the user. In some embodiments, the object type of the virtual object for interaction is fixed, the identification for the object type may be omitted.

In one embodiment, the virtual object is formed from a real object such as a real creature, a real environment, or an abiotic object. The processor 150 may scan the real object in a real environment through the motion sensor 110 (which is an image sensor) to generate a scanning result (such as the color, texture, and geometric shape of the real object), identify the real object according to the scanning result to generate an identification result (such as the real object's name, type, or identifier), create the virtual object in the virtual reality environment corresponding to the real object in the real environment according to the scanning result, and determine at least one predetermined interactive characteristic of the virtual object according to the identification result. The predetermined interactive characteristic may include a predefined manipulating portion and a predefined manipulating action. Each predefined manipulating portion could be located at a specific position on the virtual object. For example, a predefined manipulating portion of the virtual coffee cup is its handle. The predefined manipulating action could be a specific hand gesture (called as a predefined gesture later) or a specific motion of a specific human body portion of the user (called as a predefined motion later). Taking FIG. 3A as an example, the predefined manipulating action could be one index finger up gesture. For another example, the predefined manipulating action could be a swing motion of the right hand of the user.

In some embodiments, the virtual object could be predefined in the virtual reality environment.

In one embodiment, one virtual object may be defined with multiple predefined manipulating portions. In some embodiments, these predefined manipulating portions maybe not overlapped with each other. The processor 150 may determine one of the predefined manipulating portions matches with the manipulating portion. For example, the processor 150 may determine a distance or an overlapped portion between the manipulating portion formed by the collision event and each predefined manipulating portion, and the processor 150 may select one predefined manipulating portion with the nearest distance or the largest overlapped portion with the manipulating portion.

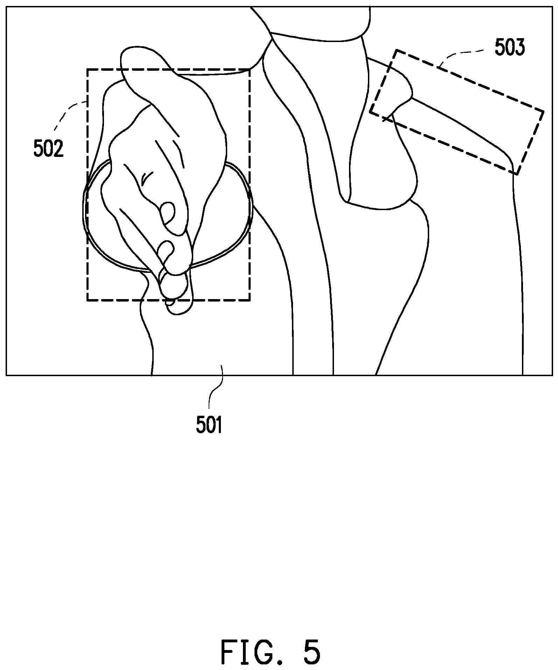

FIG. 5 is a schematic diagram illustrating multiple manipulating portions according to one of the exemplary embodiments of the disclosure. Referring to FIG. 5, the virtual person 501, which is a virtual creature, is defined with two predefined manipulating portions 502 and 503, which are located at the hand and the shoulder of the virtual person 501, respectively. The processor 150 may determine whether the user contacts with the hand or the shoulder of the virtual person 501.

Referring to FIG. 2, the processor 150 may identify a manipulating action performed by the user (step S230). Specifically, the processor 150 may determine the manipulating action based on the sensing result of the motion sensor 110. The manipulating action could be a hand gesture or the motion of a human operation portion of the user (such as the position, the pose, the speed, the moving direction, the acceleration, etc.). On the other hand, the processor 150 may predefine one or more predefined manipulating actions, and each predefined manipulating action is configured for selecting, locking, or operating the virtual object. The processor 150 may determine one of the predefined actions matches with the manipulating action.

In one embodiment, the manipulating action could be a hand gesture of the user. The processor 150 may identify the hand gesture in the image captured by the motion sensor 110. The processor 150 may further determine one of the predefined gestures matches with the hand gesture. Taking FIG. 3A as an example, the fist gesture of the user's hand 301 is identified and conformed to the predefined gesture for aiming objects.

In another embodiment, the manipulating action could be the motion of a human body portion of the user. The motion may be related to at least one of the position, the pose, the rotation, the acceleration, the displacement, the velocity, the moving direction, etc. The processor 150 may determine the motion information based on the sensing result of the motion sensor 110 and determine one of the predefined motions matches with the motion of the human body portion. For example, the motion sensor 110 embedded in a handheld controller, which is held by the user's hand, obtains 3-DoF information, and the processor 150 may determine the rotation information of the hand of the user based on the 3-DoF information.

In some embodiments, the manipulating action could be the speech of the user. The processor 150 may detect one or more predefined keywords from the speech.

After the manipulating portion, the object type, and the manipulating action are identified, the processor 150 may determine an interacting behavior of an avatar of the user with the virtual object according to the manipulating portion, the object type, and the manipulating action (step S250). Specifically, different manipulating portions, different object types, or different manipulating actions may result in different interacting behaviors of the avatar. The interacting behavior could be a specific motion or any operating behavior related to the virtual object. For example, the interacting behavior could be handshaking, a hug, a talk, a grabbing motion, a throwing motion, a teleport action, etc.

In one embodiment, the object type is identified as the virtual creature, and different predefined manipulating portions are corresponding to different interacting behaviors. Taking FIG. 5 as an example, when a collision event with the user's hand and the predefined manipulating portion 502 happens (in response to that the manipulating action is the user's hand moves toward the predefined manipulating portion 502), the interacting behavior of the avatar of the user would be a handshaking motion with the hand of the virtual person 501. When a collision event with the user's hand and the predefined manipulating portion 503 happens (in response to that the manipulating action is the user's hand moves toward the predefined manipulating portion 503), the interacting behavior of the avatar of the user would be a shoulder slapping motion with the shoulder of the virtual person 501. In some embodiments, the processor 150 may determine the interacting behavior according to the type of the virtual creature. For example, the interacting behaviors for the virtual person 501 could be some social behavior, and the interacting behaviors for other creatures could be a hunting behavior or a taming behavior.

In one embodiment, the manipulating action is a hand gesture of the user, and different predefined gestures are corresponding to different interacting behaviors. Taking FIG. 3A as an example, the one index finger up gesture of the user's hand 301 is conformed to the predefined gesture for aiming object, and the raycast 305 emitted from the user's hand 301 is generated. Although a manipulating portion is formed on the virtual person 303, the interacting behavior of the user would be no action. Taking FIG. 3B as another example, the fist gesture of the user's hand 301 is conformed to the predefined gesture for selecting the object, and the interacting behavior of the user would be forming an operating menu on the display 120 to provide further operating selections with the virtual person 303.

In one embodiment, the manipulating action is the motion of a human body portion of the user, and different predefined motions are corresponding to different interacting behaviors. Taking FIG. 5 as an example, when a collision event with the user's hand and the predefined manipulating portion 502 happens (in response to that the manipulating action is the user's hand moves toward the predefined manipulating portion 502 at higher height), the interacting behavior of the avatar of the user would be a high-five motion with the hand of the virtual person 501. When a collision event with the user's hand and the predefined manipulating portion 502 happens (in response to that the manipulating action is the user's hand moves toward the predefined manipulating portion 502 at lower height), the interacting behavior of the avatar of the user would be a punching motion with the hand of the virtual person 501.

In one embodiment, the processor 150 may further determine the speed of the motion of the human body portion, and different predefined speeds are corresponding to different interacting behaviors. Taking FIG. 5 as an example, when a collision event with the user's hand and the predefined manipulating portion 502 happens (in response to that the manipulating action is the user's hand moves toward the predefined manipulating portion 502 with lower speed), the interacting behavior of the avatar of the user would be a handshaking motion with the hand of the virtual person 501. When a collision event with the user's hand and the predefined manipulating portion 502 happens (in response to that the manipulating action is the user's hand moves toward the predefined manipulating portion 502 with higher speed), the interacting behavior of the avatar of the user would be a high-five motion with the hand of the virtual person 501.

In another embodiment, the processor 150 may further determine the moving direction of the motion of the human body portion, and different predefined moving direction s are corresponding to different interacting behaviors. Taking FIG. 5 as an example, when a collision event with the user's hand and the predefined manipulating portion 502 happens (in response to that the manipulating action is the user's hand moves toward the front of the predefined manipulating portion 502), the interacting behavior of the avatar of the user would be a handshaking motion with the hand of the virtual person 501. When a collision event with the user's hand and the predefined manipulating portion 502 happens (in response to that the manipulating action is the user's hand moves toward the back of the predefined manipulating portion 502), the interacting behavior of the avatar of the user would be no action.

It should be noted that there are still lots of factors to change the motion status, for example, the factor could be the rotation, the acceleration, continuity time, etc., and different factors of the motion of the human body portion may result in different interacting behaviors.

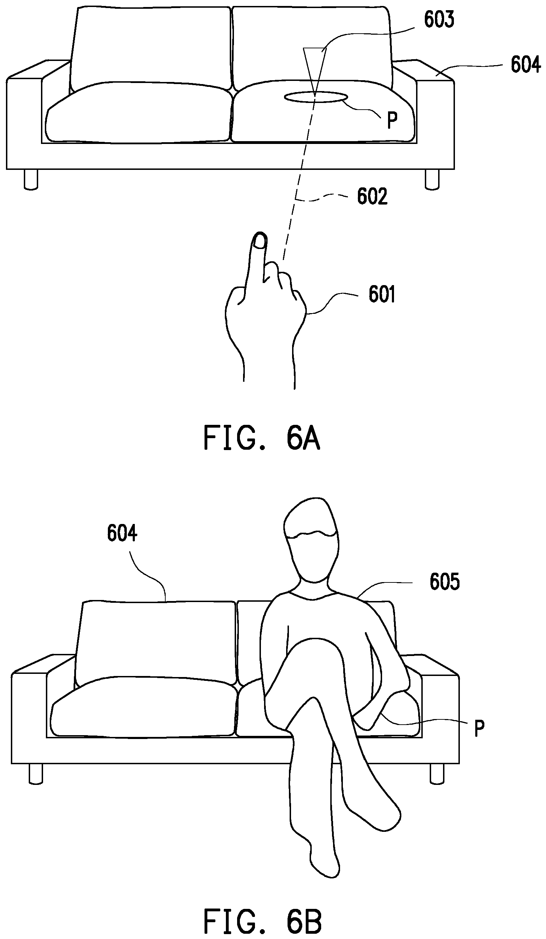

In one embodiment, the object type is identified as a floor or a seat, and the processor 150 may determine the interacting behavior as a teleport action to the floor or the seat. For example, FIG. 6A and 6B are schematic diagrams illustrating a teleport action according to one of the exemplary embodiments of the disclosure. Referring to FIG. 6A, the one index finger up gesture of the user's hand 601 is conformed to the predefined gesture for aiming object. The raycast 602 emitted from the user's hand 601 is generated, and one end of the raycast 602 is located at a seat 604 in which a manipulating portion, which is presented by a reticle with a cone triangle 603, is generated at the postion P of the seat 604. Referring to FIG. 6B, it is assumed the hand gesture of the user's hand 601 becomes the fist gesture and is conformed to the predefined gesture for selecting the object. The teleport location would be the seat 604. The avatar 605 of the user would teleport into the seat 604 and seat on the seat 604.

For another example, it is assumbed that a manipulating portion is located at the floor. The hand gesture of the user's hand 601 becomes the fist gesture from the one index finger up gesture and is conformed to the predefined gesture for selecting the object. The teleport location would be the floor. The avatar 605 of the user would teleport into the floor and stand on the floor.

In one embodiment, the object type is identified as am abiotic object (such as a virtual ball, a virtual dart, etc.), and the processor 150 may determine the interacting behavior as a grabbing motion or a picking motion to grab or pick up the virtual object.

In summary, the exemplary embodiments described above depicted the virtual object operating system and the method of interacting with virtual creature. The manipulating portion of the virtual creature, the object type of the virtual creature, and the manipulating action of the user are identified, and a corresponding interacting behavior with the virtual creature would be determined. One virtual animal may be defined with multiple predefined manipulating portions, and different interacting behaviors would be performed in response to a manipulating portion matches with different predefined manipulating portions. In addition, the hand gesture and the motion of the human body portion of the user may affect the interacting behavior. Accordingly, a variety of interacting behaviors is provided.

## Claims

1. A method of interacting with virtual creature (303, 402, 501, 604) in a virtual reality environment, **characterized by** comprising:
identifying a manipulating portion (502, 503) on a virtual creature (303, 402, 501, 604) pointed by a user, wherein the virtual creature (303, 402, 501, 604) is created in the virtual reality environment;
identifying a manipulating action performed by the user, wherein the manipulating action is corresponding to the virtual creature (303, 402, 501, 604); and
determining an interacting behavior of an avatar (605) of the user with the virtual creature (303, 402, 501, 604) according to the manipulating portion (502, 503) and the manipulating action.

2. A virtual object operating system (100), **characterized by** comprising:
a motion sensor (110), detecting a motion of a human body portion of a user; and
a processor (150), coupled to the motion sensor (110), and configured for:
identifying a manipulating portion (502, 503) on a virtual creature (303, 402, 501, 604) pointed by the user, wherein the virtual creature (303, 402, 501, 604) is created in a virtual reality environment;
identifying a manipulating action based on a sensing result of the motion of the human body portion detected by the motion sensor (110), wherein the manipulating action is corresponding to the virtual creature (303, 402, 501, 604); and
determining an interacting behavior of an avatar (605) of the user with the virtual creature (303, 402, 501, 604) according to the manipulating portion (502, 503) and the manipulating action.

3. The method of claim 1, **characterized in that** the virtual creature (303, 402, 501, 604) is defined with a plurality of predefined manipulating portions, and step of identifying the manipulating portion (502, 503) on the virtual creature (303, 402, 501, 604) pointed by the user comprises:
determining one of the predefined manipulating portions matches with the manipulating portion (502, 503), wherein different predefined manipulating portions are corresponding to different interacting behaviors, or the virtual object operating system of claim 2, wherein the virtual creature (303, 402, 501, 604) is defined with a plurality of predefined manipulating portions, **characterized in that** the processor (150) is configured for:
determining one of the predefined manipulating portions matches with the manipulating portion (502, 503), wherein different predefined manipulating portions are corresponding to different interacting behaviors.

4. The method of claim 1, **characterized in that** the manipulating action comprises a hand gesture of the user, and the step of identifying the manipulating action performed by the user comprises:
determining one of predefined gestures matches with the hand gesture, wherein different predefined gestures are corresponding to different interacting behaviors, or the virtual object operating system (100) of claim 2, **characterized in that** the manipulating action comprises a hand gesture of the user, and the processor (150) is configured for:
determining one of predefined gestures matches with the hand gesture, wherein different predefined gestures are corresponding to different interacting behaviors.

5. The method of claim 1, **characterized in that** the manipulating action comprises a motion of a human body portion of the user, and the step of identifying the manipulating action performed by the user comprises:
determining one of predefined motions matches with the motion of the human body portion, wherein different predefined motions are corresponding to different interacting behaviors, or the virtual object operating system (100) of claim 2, **characterized in that** the manipulating action comprises a motion of a human body portion of the user, and the processor (150) is configured for:
determining one of predefined motions matches with the motion of the human body portion, wherein different predefined motions are corresponding to different interacting behaviors.

6. The method of claim 5, **characterized by** further comprising:
determining a speed of the motion of the human body portion, wherein different predefined speeds are corresponding to different interacting behaviors, or the virtual object operating system (100) of claim 5, **characterized in that** the processor (150) is configured for:
determining a speed of the motion of the human body portion, wherein different predefined speeds are corresponding to different interacting behaviors.

7. The method of claim 5, **characterized by** further comprising:
determining a moving direction of the human body portion relative to the virtual creature (303, 402, 501, 604), wherein different moving directions are corresponding to different interacting behaviors, or the virtual object operating system (100) of claim 5, **characterized in that** the processor (150) is configured for:
determining a moving direction of the human body portion relative to the virtual creature (303, 402, 501, 604), wherein different moving directions are corresponding to different interacting behaviors.

8. The method of claim 1, **characterized by** further comprising:
scanning a real creature in a real environment to generate a scanning result;
identifying the real creature according to the scanning result to generate an identification result;
creating the virtual creature (303, 402, 501, 604) in the virtual reality environment corresponding to the real creature in the real environment according to the scanning result; and
determining at least one predetermined interactive characteristic of the virtual creature (303, 402, 501, 604) according to the identification result, wherein the at least one predetermined interactive characteristic comprises a predefined manipulating portion and a predefined manipulating action, or the virtual object operating system (100) of claim 2, **characterized in that** the processor (150) is configured for:
scanning a real creature in a real environment to generate a scanning result;
identifying the real creature according to the scanning result to generate an identification result;
creating the virtual creature (303, 402, 501, 604) in the virtual reality environment corresponding to the real creature in the real environment according to the scanning result; and
determining at least one predetermined interactive characteristic of the virtual creature (303, 402, 501, 604) according to the identification result, wherein the at least one predetermined interactive characteristic comprises a predefined manipulating portion and a predefined manipulating action.

9. The method of claim 8, **characterized in that** the identification result comprises the type of the real creature, the step of determining the interacting behavior of the avatar (605) of the user with the virtual creature (303, 402, 501, 604) comprises:
determining the interacting behavior according to the type of the virtual creature (303, 402, 501, 604), or the virtual object operating system (100) of claim 8, wherein the identification result comprises the type of the real creature, and the processor (150) is configured for:
determining the interacting behavior according to the type of the virtual creature (303, 402, 501, 604).

10. The method of claim 1, **characterized in that** the step of identifying the manipulating portion (502, 503) on the virtual creature (303, 402, 501, 604) pointed by the user comprises:
forming a first interacting region (403, 404) acted with a human body portion of the avatar (605);
forming a second interacting region (403, 404) acted with the virtual creature (303, 402, 501, 604); and
determining whether the first interacting region (403, 404) collides with the second interacting region (403, 404) to determine the manipulating portion (502, 503), wherein the manipulating portion (502, 503) is related to a contact portion between the first interacting region (403, 404) and the second interacting region (403, 404), or the virtual object operating system (100) of claim 2, **characterized in that** the processor (150) is configured for:
forming a first interacting region (403, 404) acted with the human body portion of the avatar (605);
forming a second interacting region (403, 404) acted with the virtual creature (303, 402, 501, 604); and
determining whether the first interacting region (403, 404) collides with the second interacting region (403, 404) to determine the manipulating portion (502, 503), wherein the manipulating portion (502, 503) is related to a contact portion between the first interacting region (403, 404) and the second interacting region (403, 404).

11. The method of claim 1 or the virtual object operating system (100) of claim 2, **characterized in that** the manipulating portion (502, 503) is related to an end of a raycast (305, 602) or a teleport location.
